# EUROPEAN PATENT SPECIFICATION

(11) **EP 3 553 578 B1**
(45) Date of publication and mention of the grant of the patent: **07.06.2023**
(21) Application number: 17877839.5
(22) Date of filing: 27.11.2017
(51) Int. Cl.: G02B 6/44

(54) **INTERMITTENT CONNECTION TYPE OPTICAL FIBER TAPE CORE, METHOD FOR MANUFACTURING SAME, OPTICAL FIBER CABLE, AND OPTICAL FIBER CORD**
GLASFASERBANDKERN MIT SPORADISCHER VERBINDUNG, VERFAHREN ZUR HERSTELLUNG DAVON, GLASFASERKABEL UND GLASFASERCORD
NOYAU DE RUBAN DE FIBRE OPTIQUE DE TYPE À CONNEXION INTERMITTENTE, SON PROCÉDÉ DE FABRICATION, CÂBLE À FIBRE OPTIQUE ET CORDON DE FIBRE OPTIQUE

(30) Priority: 06.12.2016 JP 2016236568
(43) Date of publication of application: 16.10.2019
(73) Proprietor: Sumitomo Electric Industries, Ltd., Osaka-shi, Osaka 541-0041 (JP)
(72) Inventor: SATO, Fumiaki, Yokohama-shi, Kanagawa 244-8588 (JP); YOSHIZAWA, Fumikazu, Yokohama-shi, Kanagawa 244-8588 (JP); NAGAO, Yoshiaki, Yokohama-shi, Kanagawa 244-8588 (JP)
(74) Representative: Hoffmann Eitle
(86) International application number: PCT/JP2017/042401
(87) International publication number: WO 2018/105424

(56) References cited:
- EP-A1- 2 770 357
- WO-A1-2016/060647
- JP-A- 2009 093 077
- JP-A- 2011 169 938
- JP-A- 2011 232 733
- JP-A- 2013 088 617
- JP-A- 2013 167 753
- JP-A- 2013 167 762
- JP-A- 2013 178 583
- JP-A- 2014 157 382
- JP-A- 2015 007 714
- JP-A- 2016 020 989
- JP-A- 2016 075 746
- US-A1- 2003 223 718
- US-A1- 2014 226 941

## Description

### TECHNICAL FIELD

The present invention relates to an intermittently-coupled type optical fiber ribbon, an optical fiber cable, an optical fiber cord, and a manufacturing method of the intermittently-coupled type optical fiber ribbon. The application is based upon and claims the benefit of priority from the prior Japanese Patent Application No. 2016-236568 filed on December 6, 2016.

### BACKGROUND ART

An intermittently-coupled type optical fiber ribbon is known which a coupling part in which adjacent optical fibers are connected by an adhesive resin and a non-coupling part in which adjacent optical fibers are not connected by an adhesive resin are intermittently provided in a longitudinal direction in a state where a plurality of optical fibers are arranged in parallel (for example, see Patent Documents 1 to 3).

The state of the art relevant to the present disclosure includes the documents listed below.

### Patent Document

Patent Document 1: Japanese Patent Application Publication No. 2004-206048
Patent Document 2: Japanese Patent Application Publication No. 2004-206048
Patent Document 3: Japanese Patent Application Publication No. 2013-88617
Patent Document 4: Japanese Patent Application Publication No. 2016-075746
Patent Document 5: Japanese Patent Application Publication No. 2013-088617
Patent Document 6: Japanese Patent Application Publication No. 2013-167762
Patent Document 7: Japanese Patent Application Publication No. 2011-232733
Patent Document 8: Japanese Patent Application Publication No. 2014-157382
Patent Document 9: Japanese Patent Application Publication No. 2016-020989
Patent Document 10 : Japanese Patent Application Publication No. 2011-169938

### SUMMARY OF INVENTION

The present invention relates to an intermittently-coupled type optical fiber ribbon as recited in claim 1 below.

An aspect of the present disclosure is an optical fiber cable as recited in claim 5 below.

An aspect of the present disclosure is an optical fiber cable as recited in claim 6 below.

An aspect of the present disclosure is an optical fiber cord as recited in claim 7 below.

An aspect of the present disclosure is a manufacturing method of an intermittently-coupled type optical fiber ribbon as recited in claim 8 below.

The dependent claims define particular embodiments of each respective aspect.

### BRIEF DESCRIPTION OF DRAWINGS

Fig. 1 is a plan view illustrating one example of an intermittently-coupled type optical fiber ribbon according to this embodiment (illustrating a state where a non-coupling part is opened in a parallel direction);
Fig. 2 is a sectional view illustrating a state where the non-coupling part of the intermittently-coupled type optical fiber ribbon illustrated in Fig. 1 is closed in the parallel direction as seen along line A-A;
Fig. 3 is a schematic view illustrating a relation between a pitch of an intermittently-coupled type optical fiber ribbon of a first reference example and a V groove of a fusion machine in a fusion process;
Fig. 4 is a schematic view illustrating a relation between a pitch of an intermittently-coupled type optical fiber ribbon of a second reference example and the V groove of the fusion machine in the fusion process;
Fig. 5 is a schematic view illustrating a relation between a pitch of an intermittently-coupled type optical fiber ribbon according to this embodiment and the V groove of the fusion machine in the fusion process;
Fig. 6 is a schematic view illustrating one example of a manufacturing device of the intermittently-coupled type optical fiber ribbon according to this embodiment;
Fig. 7 is a plan view illustrating one example of an optical fiber cord according to this embodiment;
Fig. 8 is a plan view illustrating one example of an optical fiber cable according to this embodiment;
Fig. 9 is a plan view illustrating another example of the optical fiber cable according to this embodiment;
Fig. 10 is a sectional view illustrating a modification of the intermittently-coupled type optical fiber ribbon according to this embodiment;
Fig. 11 is a sectional view illustrating an intermittently-coupled type optical fiber ribbon of a first comparative example; and
Fig. 12 is a sectional view illustrating an intermittently-coupled type optical fiber ribbon of a second comparative example.

### DESCRIPTION OF EMBODIMENTS

### [Problems to be Solved by Present Disclosure]

In order to increase the density of an optical fiber cable or an optical fiber cord which stores an intermittently-coupled type optical fiber ribbon, an examination on the outer diameter of an optical fiber used in the intermittently-coupled type optical fiber ribbon is made from 0.25 mm (typical diameter, 250 µm) to 0.22 mm (220 µm), for example.

In a fusion machine which fuses the optical fiber ribbons to each other, a general optical fiber ribbon uses an optical fiber having a diameter of 0.25 mm. Thus, the pitch of the V groove is set to 0.25 mm. For this reason, when the above-described fusion machine is used for the intermittently-coupled type optical fiber ribbon in which the outer diameter of the optical fiber is 0.22 mm or less, the pitch of the V groove is different from an arrangement pitch of the optical fiber of the intermittently-coupled type optical fiber ribbon. Thus, the position of the optical fiber is deviated from the position of the V groove.

As described above, when the fusion machine is used in a state where the position of the optical fiber is deviated from the position of the V groove, there is a concern that the optical fibers cannot be placed one by one on each of the V grooves, and a normal splicing cannot be performed.

For this reason, for example, in the intermittently-coupled type optical fiber ribbon disclosed in JP-A-2013-88617 in which the outer diameter of the optical fiber is 0.22 mm or less, a gap is provided in each of spaces between the optical fibers, the gap is filled with an adhesive resin, and a center distance between the optical fibers matches with the pitch of the V groove of the fusion machine.

However, in the configuration of JP-A-2013-88617, the cross-sectional area of the intermittently-coupled type optical fiber ribbon is almost the same as that of the typical intermittently-coupled type optical fiber ribbon in which the outer diameter of the optical fiber is 0.25 mm. For this reason, although the outer diameter of the optical fiber is small, it is not possible to increase the density of the optical fiber cable or the optical fiber cord using the intermittently-coupled type optical fiber ribbon. Other related examples of intermittently-coupled type optical fiber ribbon comprising a plurality of ribbon type paired optical fibers have been disclosed in JP 2013088617 A and WO 2016/060647 A1.

An object of the present disclosure is to provide an intermittently-coupled type optical fiber ribbon, an optical fiber cable and optical fiber cord using the intermittently-coupled type optical fiber ribbon, and a manufacturing method of the intermittently-coupled type optical fiber ribbon in which a fusion machine in which a pitch of a V groove is set to 0.25 mm can be used to fuse without any problems, and a density of the optical fiber cable and the optical fiber cord can be increased.

### [Effect of Present Disclosure]

According to the present disclosure, the fusion machine in which the pitch of the V groove is set to 0.25 mm can be used to fuse without any problems, and the density of the optical fiber cable and the optical fiber cord can be increased.

### [Description of embodiments of the invention]

First, the embodiment of the invention will be described as enumerated.

An intermittently-coupled type optical fiber ribbon according to one aspect is
(1) an intermittently-coupled type optical fiber ribbon in which a plurality of ribbon type paired optical fibers integrally formed by bringing two optical fibers into contact with each other are arranged in parallel, and a coupling part in which adjacent ribbon type paired optical fibers are connected to each other and a non-coupling part in which ribbon type paired optical fibers are not connected are intermittently provided in a longitudinal direction, in which
an outer diameter dimension of the optical fiber is 0.22 mm or less, and a center distance of optical fibers adjacent with the coupling part interposed therebetween between the adjacent ribbon type paired optical fibers is 0.28 ± 0.03 mm.

According to the configuration, the optical fibers are arranged in the positions corresponding to the V grooves, respectively. Thus, the optical fibers can be placed one by one in each of the V grooves, and the fusion machine in which the pitch of the V groove is set to 0.25 mm can be used to fuse without any problems.

In addition, the dual-core optical fiber ribbon is used which is integrally formed by bringing two optical fibers having an outer diameter dimension of 0.22 mm or less into contact with each other. Thus, the width of the entire intermittently-coupled type optical fiber ribbon in a parallel direction is narrower than that of the conventional intermittently-coupled type optical fiber ribbon, and the sectional area of the intermittently-coupled type optical fiber ribbon can be reduced. Therefore, when the intermittently-coupled type optical fiber ribbon is used for the optical fiber cable or the optical fiber cord, the density of the optical fiber cable or the optical fiber cord can be increased.

(2) The number of optical fibers of the intermittently-coupled type optical fiber ribbon is N, a center distance between the M-th optical fiber and the M+1-th optical fiber with the coupling part interposed therebetween is 0.28 ± 0.03 mm, a center distance between the M-1-th optical fiber and the M-th optical fiber is 0.20 ± 0.03mm, the N is a multiple of four, and the M is an even number.

The center distance between the M-1-th optical fiber and the M-th optical fiber, that is, between the optical fibers configuring the dual-core optical fiber ribbon is 0.20 ± 0.03 mm. Thus, the width of the entire intermittently-coupled type optical fiber ribbon in the parallel direction is narrower than that of the conventional intermittently-coupled type optical fiber ribbon, and the sectional area of the intermittently-coupled type optical fiber ribbon can be reduced more easily. Therefore, when the intermittently-coupled type optical fiber ribbon is used for the optical fiber cable or the optical fiber cord, the density of the optical fiber cable or the optical fiber cord can be increased.

(3) A thickness of the intermittently-coupled type optical fiber ribbon is 0.26 mm or less.

When the thickness of the intermittently-coupled type optical fiber ribbon is suppressed to be 0.26 mm or less, the density of the optical fiber cable or the optical fiber cord can be increased.

(4) The coupling part is a coupling resin applied between the ribbon type paired optical fibers.

The coupling part in which the adjacent ribbon type paired optical fibers are connected by the coupling resin applied between the ribbon type paired optical fibers can be formed easily.

(5) The optical fiber has a glass fiber and two layers of coating layers coating the glass fiber, and
a Young's modulus of an inner coating layer in two layers of the coating layer is 0.5MPa or less.

Since the Young's modulus of the inner coating layer of the optical fiber is 0.5 MPa or less, the deterioration of the lateral pressure characteristic caused by thinning the thickness the coating layer of the optical fiber can be suppressed.

An optical fiber cable according to one aspect includes:
(6) a cylindrical tube; and
a plurality of intermittently-coupled type optical fiber ribbons according to any one of the above (1) to (5), in which
the plurality of intermittently-coupled type optical fiber ribbons are covered with the tube.

According to the configuration, a plurality of intermittently-coupled type optical fiber ribbons according to any one of (1) to (5) are achieved. Thus, the density can be increased compared to the conventional optical fiber cable. In addition, when the number of optical fibers is the same, the outer diameter can be made smaller than that of the conventional optical fiber cable.

An optical fiber cable according to one aspect includes:
(7) a slot rod having a plurality of slot grooves; and
the plurality of intermittently-coupled type optical fiber ribbons according to any one of the above (1) to (5), in which
the plurality of intermittently-coupled type optical fiber ribbons are housed in each of the slot grooves.

According to the configuration, a plurality of intermittently-coupled type optical fiber ribbons according to any one of (1) to (5) are achieved. The density can be increased compared to the conventional optical fiber cable. In addition, when the number of optical fibers is the same, the outer diameter can be made smaller than that of the conventional optical fiber cable.

An optical fiber cord according to one aspect includes:
(8) a jacket; and
the intermittently-coupled type optical fiber ribbon according to any one of the above (1) to (5), in which
the intermittently-coupled type optical fiber ribbon is covered with the jacket.

According to the configuration, the outer diameter of the optical fiber cord can be reduced compared to the conventional one. In addition, the density of the optical fiber cord can be increased compared to the conventional one.

A manufacturing method of an intermittently-coupled type optical fiber ribbon according to one aspect includes:
(9) a process of arranging a plurality of optical fibers having an outer diameter dimension of 0.22 mm or less in parallel and integrating every two optical fibers by bringing the optical fibers into contact with each other, thereby forming a plurality of ribbon type paired optical fibers;
an applying process of intermittently applying a coupling resin between the adjacent ribbon type paired optical fibers in the plurality of ribbon type paired optical fibers in a longitudinal direction; and
a curing process of curing the coupling resin, in which
when the applying process and the curing process are performed,
a coupling part in which the adjacent ribbon type paired optical fibers are connected with each other and a non-coupling part in which the ribbon type paired optical fibers are not connected are intermittently provided in a longitudinal direction, and a center distance of optical fibers adjacent with the coupling part interposed therebetween between the ribbon type paired optical fibers is set to 0.28 ± 0.03 mm.

According to the configuration of the intermittently-coupled type optical fiber ribbon manufactured by the manufacturing method, the optical fibers are arranged at the positions corresponding to the V grooves, respectively. Thus, the optical fibers can be placed one by one on each of the V grooves, and the fusion machine in which the pitch of the V groove is set to 0.25 mm can be used to fuse without any problems.

In addition, the dual-core optical fiber ribbon is used which is integrally formed by bringing two optical fibers having the outer diameter dimension of 0.22 mm or less into contact with each other. Thus, the width of the entire intermittently-coupled type optical fiber ribbon in the parallel direction is narrower than that of the conventional intermittently-coupled type optical fiber ribbon, and the sectional area of the intermittently-coupled type optical fiber ribbon can be reduced. Therefore, when the intermittently-coupled type optical fiber ribbon is used for the optical fiber cable or the optical fiber cord, the density of the optical fiber cable or the optical fiber cord can be increased.

### [Details of embodiments of the invention]

Hereinafter, the specific examples of the intermittently-coupled type optical fiber ribbon, the optical fiber cable, the optical fiber cord, and the manufacturing method of the intermittently-coupled type optical fiber ribbon according to the embodiments of the invention will be described with reference to the drawings.

Incidentally, the invention is not limited to the examples. The scope of the invention is defined by the claims, and it is intended to include all modifications within the scope of the claims.

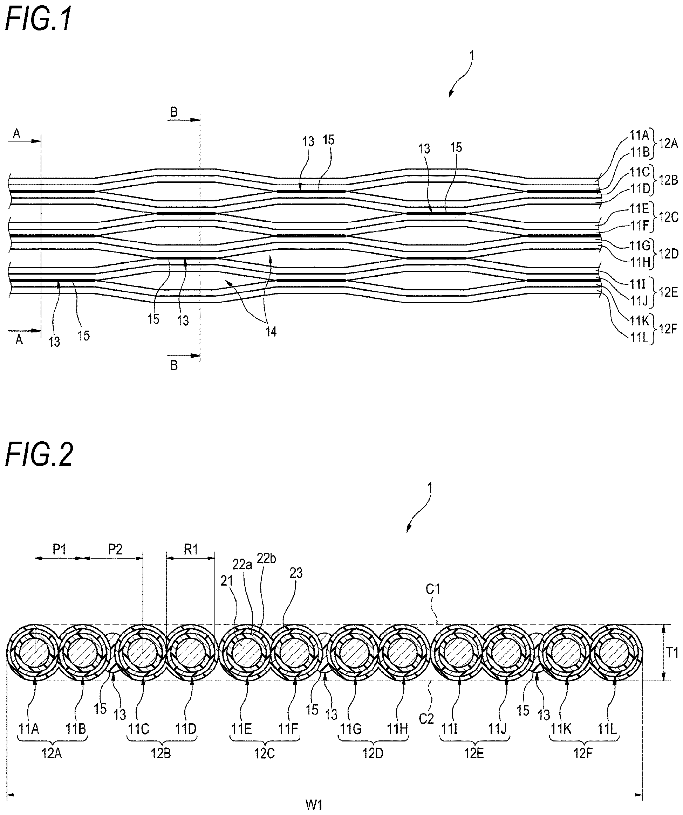

One example of the intermittently-coupled type optical fiber ribbon according to the embodiment will be described with reference to Figs. 1 and 2.

As illustrated in Figs. 1 and 2, in an intermittently-coupled type optical fiber ribbon 1, a plurality of (six in the example of Figs. 1 and 2) ribbon type paired optical fibers 12A to 12F which are integrally formed by bringing two optical fibers into contact with each other are arranged in parallel. In addition, in the intermittently-coupled type optical fiber ribbon 1, a coupling part 13 in which adjacent ribbon type paired optical fibers are connected to each other and a non-coupling part 14 in which adjacent ribbon type paired optical fibers are not connected to each other are intermittently provided in the longitudinal direction. Incidentally, the plan view of Fig. 1 illustrates a state where the non-coupling part 14 is opened in the parallel direction, and the sectional view of Fig. 2 illustrates a cross section taken along line A-A of Fig. 1 in a state where the non-coupling part 14 is closed in the parallel direction. Incidentally, the "cross section" in this specification indicates a section of the intermittently-coupled type optical fiber ribbon when seen from the longitudinal direction (for example, the lateral direction of Fig. 1).

The dual-core optical fiber ribbon 12A is configured by optical fibers 11A and 11B, the dual-core optical fiber ribbon 12B is configured by optical fibers 11C and 11D, and the dual-core optical fiber ribbon 12C is configured by optical fibers 11E and 11F. In addition, the dual-core optical fiber ribbon 12D is configured by optical fibers 11G and 11H, the dual-core optical fiber ribbon 12E is configured by optical fibers 11I and 11J, and the dual-core optical fiber ribbon 12F is configured by optical fibers 11K and 11L.

The intermittently-coupled type optical fiber ribbon 1 is configured by the optical fibers 11A to 11L, the number of which is a multiple of four (twelve in the example of Figs. 1 and 2).

For example, the optical fibers 11A to 11L are single coated optical fibers which each have a glass fiber 21 and two layers of coating layers 22a (inner coating layer) and 22b (outer coating layer) coating the glass fiber 21. It is preferable that the Young's modulus of the coating layer 22a is 0.5 MPa or less. A bent toughened glass fiber defined in ITU-T G.657.A/B may be used to improve the bending resistance of the glass portion.

In the optical fibers 11A to 11L, an outer diameter dimension R1 is formed to be 0.22 mm or less. For example, the diameter of the glass fiber 21 of the optical fibers 11A to 11L is 0.125 mm, and the diameter of the outer coating layer 22b is 0.20 ± 0.02 mm. Incidentally, in the optical fibers 11A to 11L, in order to discriminate the optical fibers from each other, the coating layers 22b may be colored in colors different from each other, or coloring layers may be provided in the outer peripheries of the coating layers 22b.

The ribbon type paired optical fibers 12A to 12F are integrated by applying a tape resin 23 to each of the surfaces of two contacting optical fibers 11A and 11B, two contacting optical fibers 11C and 11D, two contacting optical fibers 11E and 11F, two contacting optical fibers 11G and 11H, two contacting optical fibers 11I and 11J, and two contacting optical fibers 11K and 11L. A thickness T1 of the ribbon type paired optical fibers 12A to 12F collectively coated by the tape resin 23, that is, the thickness T1 of the intermittently-coupled type optical fiber ribbon 1 is formed to be 0.26 mm or less. For example, an ultraviolet curable resin, a thermosetting resin, or the like is used for the tape resin 23. Incidentally, the tape resin 23 is preferably a resin having excellent peelability in order to facilitate the fiber separation process of the optical fibers 11A to 11L.

The coupling part 13 in which adjacent ribbon type paired optical fibers are connected to each other is formed by a coupling resin 15 applied between the ribbon type paired optical fibers.

For example, in Fig. 2, that is, in the position of line A-A of Fig. 1, the coupling resins 15 are applied between the ribbon type paired optical fibers 12A and 12B, between the ribbon type paired optical fibers 12C and 12D, and between the ribbon type paired optical fibers 12E and 12F. In addition, for example, in the position of line B-B of Fig. 1, the coupling resins 15 are applied between the ribbon type paired optical fibers 12B and 12C and between the ribbon type paired optical fibers 12D and 12E.

In a cross-sectional view of Fig. 2, the coupling resin 15 is applied such that the position of the upper end of the coupling resin 15 is not higher than the position of a broken line C1 which connects the upper ends of the tape resin 23 applied to the vicinity of the optical fibers 11A to 11L. In addition, similarly, the coupling resin is applied such that the position of the lower end of the coupling resin 15 is not lower than the position of the broken line C2 which connects the lower ends of the tape resin 23. For example, an ultraviolet curable resin, a thermosetting resin, or the like is used for the coupling resin 15. The coupling resin 15 is preferably a resin having excellent peelability in order to facilitate the fiber separation process of the optical fibers 11A to 11L.

In the intermittently-coupled type optical fiber ribbon 1, in a case where the number N of cores is set to a multiple of four, and M is set to an even number, a center distance (hereinafter, referred to as a pitch between fibers) P1 between the M-1-th optical fiber and the M-th optical fiber is formed to be 0.20 ± 0.03 mm. In addition, a center distance P2 between the M-th optical fiber and the M+1-th optical fiber in a case where the coupling part 13 is interposed therebetween is formed to be 0.28 ± 0.03 mm.

For example, in Fig. 2, the center distance P1 between the first optical fiber 11A and the second optical fiber 11B is formed to be 0.20 ± 0.03 mm. In addition, the center distance P2 between the second optical fiber 11B and the third optical fiber 11C is formed to be 0.28 ± 0.03 mm. That is, the center distance between two optical fibers included in the ribbon type paired optical fibers 12A to 12F is formed to be 0.20 ± 0.03 mm, and the center distance of adjacent optical fibers between the adjacent ribbon type paired optical fibers in the coupling part 13 is formed to be 0.28 ± 0.03 mm.

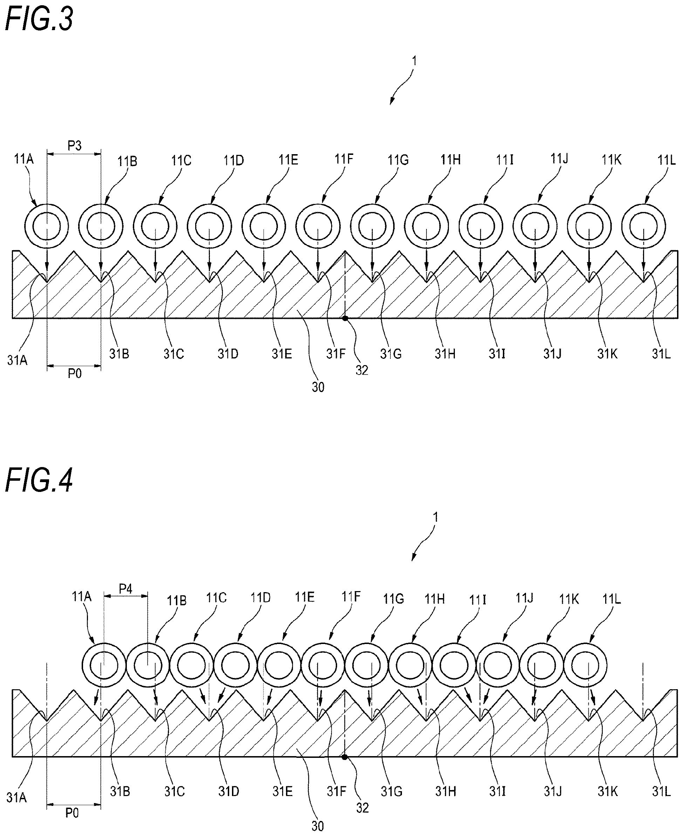

Next, the fusion of the optical fiber ribbon will be described with reference to Figs. 3 to 5.

In a case where the optical fiber ribbons are connected, the multi-core fusion machine (not illustrated) can be used to collectively splice a plurality of optical fibers. As illustrated in Figs. 3 to 5, a V groove base 30 which has a plurality (twelve in the example of Figs. 3 to 5) of V grooves 31Ato 31L for arranging optical fibers is provided in the multi-core fusion machine. The V grooves 31A to 31L are generally formed such that a pitch P0 is 0.25 mm in accordance with the international standard of the diameter of the optical fiber. In order to collectively splice a plurality of optical fibers, it is necessary to arrange the optical fibers one by one in order in the V grooves 3 1A to 31L of the V groove base 30, respectively.

Fig. 3 illustrates the fusion process of the intermittently-coupled type optical fiber ribbon of the first reference example in which the optical fibers 11A to 11L having an outer diameter dimension of 0.20mm are arranged in parallel such that a center distance P3 between adjacent optical fibers is 0.25 mm. Incidentally, the pitch P0 of the V grooves 31Ato 31L in the V groove base 30 of the multi-core fusion machine is formed to be 0.25 mm.

At the time of the fusion, as illustrated in Fig. 3, the optical fibers 11A to 11L in a state where a predetermined length of tape resin of the tip is removed are arranged above the V groove base 30. For example, the optical fibers 11A to 11L are arranged such that the center position 32 of the V groove base 30 in a direction in which the V grooves are arranged in parallel coincides with the center position in a direction in which the optical fibers 11A to 11L are arranged in parallel. In this state, a clamp lid (not illustrated) of the multi-core fusion machine is closed, and the optical fibers 11A to 11L are pushed down from above by the clamp lid.

In the case of the intermittently-coupled type optical fiber ribbon having such a configuration, the center distance P3 is formed to be equal to the pitch P0 of the V groove. Thus, the optical fibers 11A to 11L are arranged to face the V grooves 3 1A to 31L, respectively. For this reason, the optical fibers 11A to 11L are almost vertically pushed down and housed one by one in order in the V grooves 31A to 31L, respectively.

Fig. 4 illustrates a fusion process of an intermittently-coupled type optical fiber ribbon of a second reference example in which the optical fibers 11A to 11L having an outer diameter dimension of 0.20 mm are arranged in parallel such that a center distance P4 of adjacent optical fibers is 0.20 mm. Incidentally, the pitch P0 of the V grooves 31Ato 31L in the V groove base 30 is formed to be 0.25 mm.

During the fusing, as illustrated in Fig. 4, the optical fibers 11A to 11L are arranged above the V groove base 30 such that the center positions are aligned similarly to Fig. 3. In addition, the clamp lid of the multi-core fusion machine is closed, and the optical fibers 11A to 11L are pushed down from above.

In the case of the intermittently-coupled type optical fiber ribbon configured as above, the center distance P4 of the optical fibers 11A to 11L is formed smaller than the pitch P0 of the V grooves 31A to 31L, and the optical fibers 11A to 11L are arranged to gather in the direction of the center position 32 of the V groove base 30. For this reason, the optical fibers 11A to 11L are pushed down along the groove walls of the V grooves in the directions of the arrows, for example. Therefore, the optical fibers 11A to 11L cannot be housed in order in the V grooves 31Ato 31L. For example, in some cases, the optical fiber is not housed in the end V grooves 31A and 31L or the like.

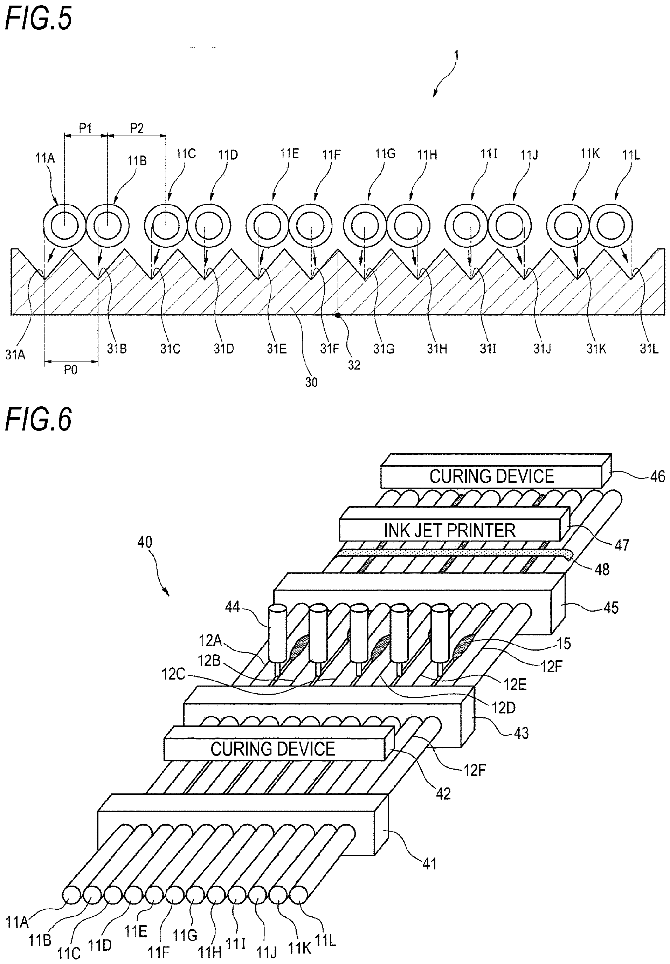

Fig. 5 illustrates the fusion process of the intermittently-coupled type optical fiber ribbon 1 illustrated in Fig. 2 according to this embodiment. During the fusing, as illustrated in Fig. 5, the optical fibers 11A to 11L are arranged above the V groove base 30 such that the center positions are aligned similarly to Fig. 3. In addition, the clamp lid of the multi-core fusion machine is closed, and the optical fibers 11A to 11L are pushed down from above.

In the case of the intermittently-coupled type optical fiber ribbon 1 according to this embodiment, the center distance P1 between the optical fibers in the dual-core optical fiber ribbon is formed smaller than the pitch P0 of the V groove. However, the center distance P2 of the optical fibers adjacent with the coupling part 13 interposed therebetween between adjacent ribbon type paired optical fibers is formed larger than the pitch P0 of the V groove. For this reason, the optical fibers 11A to 11L are arranged to gather overall in the direction of the center position 32 of the V groove base 30. However, in the case of being pushed down by the clamp lid, the optical fibers are guided along the groove walls of the V grooves in the directions of the arrows illustrated in Fig. 5. Accordingly, the optical fibers 11A to 11L are housed one by one in order in the V grooves 31A to 31L, respectively.

Incidentally, in the above-described configuration, the optical fibers in a state where the tape resins are removed are housed in the V grooves 31Ato 31L. However, for example, the coating layer may be removed in addition to the tape resin, so that only the glass fibers are housed in the V grooves 31A to 31L.

Next, the manufacturing method of the intermittently-coupled type optical fiber ribbon 1 will be described with reference to Fig. 6.

First, optical fibers are drawn such that the diameter of the glass fiber 21 is 0.125 mm, and the diameter of the coating layer 22b is 0.20 mm, thereby manufacturing the optical fibers 11A to 11L. Incidentally, in a case where distinctive characters are given to the optical fibers, for example, the coating layer 22b is colored to manufacture the colored optical fibers 11A to 11L. In this example, the optical fibers 11A to 11L having an outer diameter of about 0.21 mm are manufactured by coloring.

Twelve optical fibers 11A to 11L are prepared, and optical fibers are passed through a coating die 41 of the manufacturing device 40 in a state where the optical fibers are brought into contact with each other two by two. By the coating die 41, the surfaces of two optical fibers 11A and 11B, 11C and 11D, 11E and 11F, 11G and 11H, 11I and 11J, and 11K and 11L are coated with the tape resins 23 (see Fig. 2).

The optical fibers coated with the tape resins 23 are irradiated by a curing device 42 with ultraviolet rays, and the tape resins 23 are cured. Accordingly, six ribbon type paired optical fibers 12A to 12F in which the center distance P1 of the optical fibers is 0.20 ± 0.03 mm are manufactured.

Subsequently, the ribbon type paired optical fibers 12A to 12F are arranged in parallel and are passed through a positioning die 43. A gap between the ribbon type paired optical fibers is made by the positioning die 43 such that the center distance of adjacent optical fibers between adjacent ribbon type paired optical fibers is 0.28 ± 0.03 mm.

Subsequently, by a coating device 44 such as a dispenser, the coupling resin 15 is intermittently applied between the ribbon type paired optical fibers. For example, the coupling resin 15 is applied to the position of the coupling part 13 as illustrated in Fig. 1. Specifically, at the position of line A-A of Fig. 1, the coupling resins 15 are applied between the ribbon type paired optical fibers 12A and 12B, between the ribbon type paired optical fibers 12C and 12D, and between the ribbon type paired optical fibers 12E and 12F.

Subsequently, the ribbon type paired optical fibers in a state where the coupling resins 15 are applied are arranged in parallel to pass through an extending die 45. The coupling resin 15 is pressed vertically by a protrusion part provided in the extending die 45 to extend by a predetermined length (the length of the coupling part 13).

Subsequently, for example, in a case where an ultraviolet curable resin is used as the coupling resin 15, the ribbon type paired optical fibers in which the coupling resin 15 is extended are irradiated with ultraviolet rays by the curing device 46 to cure the coupling resin 15. Accordingly, the intermittently-coupled type optical fiber ribbon 1 is manufactured completely such that the center distance between the optical fibers included in the dual-core optical fiber ribbon is 0.20 ± 0.03 mm, and the center distance of adjacent optical fibers between adjacent ribbon type paired optical fibers is 0.28 ± 0.03 mm.

Incidentally, in a process before the optical fibers pass through the curing device 46, for example, an identification mark 48 may be printed on the optical fiber or the like by an ink jet printer 47.

In the intermittently-coupled type optical fiber ribbon 1 manufactured as described above, as illustrated in Fig. 5, when the fusion machine in which the pitch of the V grooves 3 1Ato 31L is set to 0.25 mm is used, the optical fibers 11A to 11L are arranged in the positions corresponding to the V grooves 31Ato 31L, respectively. Thus, the optical fibers 11A to 11L can be housed one by one in the V grooves 31A to 31L, respectively.

In addition, the ribbon type paired optical fibers 12A to 12F are integrally formed by bringing two optical fibers having an outer diameter dimension R1 of 0.22 mm or less into contact with each other, and are formed such that the center distance P1 between the optical fibers configuring the dual-core optical fiber ribbon is 0.20 ± 0.03 mm. For this reason, the width W1 of the entire intermittently-coupled type optical fiber ribbon 1 in the parallel direction can be narrower than the width of the conventional intermittently-coupled type optical fiber ribbon. The cross-sectional area of the intermittently-coupled type optical fiber ribbon 1 can be reduced. Therefore, the density of the optical fiber cable or the optical fiber cord can be increased by using the intermittently-coupled type optical fiber ribbon 1 for the optical fiber cable or the optical fiber cord.

When the thickness T1 of the intermittently-coupled type optical fiber ribbon 1 is suppressed to be 0.26 mm or less, the cross-sectional area can be reduced further, and the density of the optical fiber cable or the optical fiber cord can be increased.

The coupling part 13 in which adjacent ribbon type paired optical fibers are connected can be formed easily by the coupling resin 15 applied between the ribbon type paired optical fibers. In addition, since the Young's modulus of the inner coating layer 22a of the optical fibers 11A to 11L is 0.5 MPa or less, the deterioration of the lateral pressure characteristic caused by thinning the thickness of the coating layers (22a and 22b) of the optical fibers 11A to 11L can be suppressed.

According to the manufacturing method of the intermittently-coupled type optical fiber ribbon 1, the intermittently-coupled type optical fiber ribbon configured such that even the fusion machine in which the pitch of the V groove is set to 0.25 mm can fuse without any problems can be manufactured.

The dual-core optical fiber ribbon in which the center distance P1 between the optical fibers is 0.20 ± 0.03 mm can be manufactured by the optical fiber having an outer diameter dimension R1 of 0.22 mm or less, and the intermittently-coupled type optical fiber ribbon 1 can be manufactured by applying the coupling resin 15 between the ribbon type paired optical fibers. For this reason, the width W1 of the entire intermittently-coupled type optical fiber ribbon in the parallel direction can be narrowed to reduce the cross-sectional area of the intermittently-coupled type optical fiber ribbon. Accordingly, in a case where the intermittently-coupled type optical fiber ribbon is used for the optical fiber cable or the optical fiber cord, the density of the optical fiber cable or the optical fiber cord can be increased.

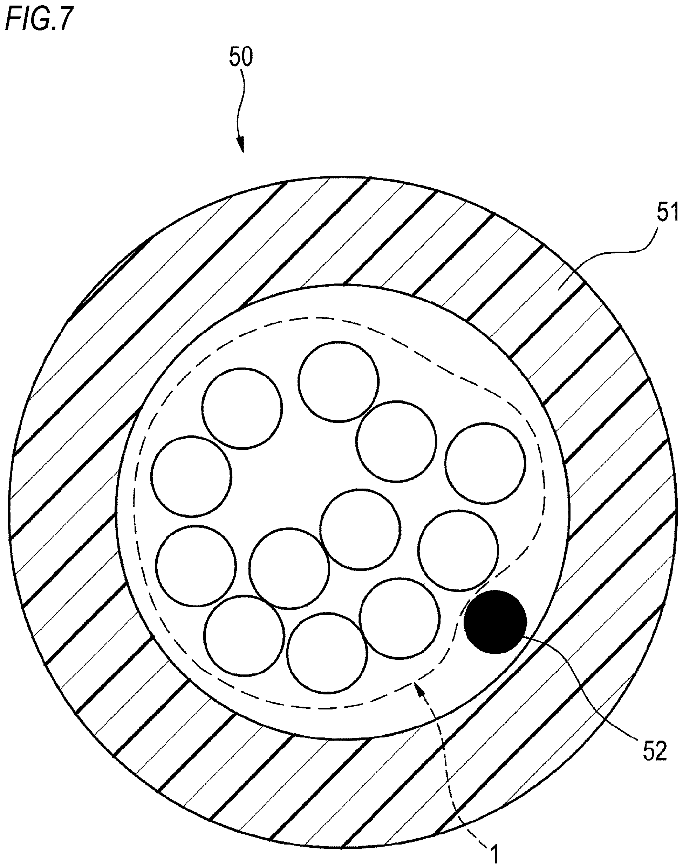

Next, one example of the optical fiber cord according to the embodiment will be described with reference to Fig. 7.

Fig. 7 is a sectional view illustrating an optical fiber cord 50 using the above-described intermittently-coupled type optical fiber ribbon 1.

The optical fiber cord 50 has a jacket 51 and the intermittently-coupled type optical fiber ribbon 1. For example, the intermittently-coupled type optical fiber ribbon 1 is covered with the cylindrical jacket 51. In addition, the intermittently-coupled type optical fiber ribbon 1 may be bundled by an intervenient layer 52 made of Kevlar.

Since the cross-sectional area can be reduced compared to the conventional intermittently-coupled type optical fiber ribbon, the optical fiber cord 50 can be formed such that the outer diameter is smaller than that of the conventional optical fiber cord. In addition, the density of the optical fiber cord 50 can be increased compared to the conventional one.

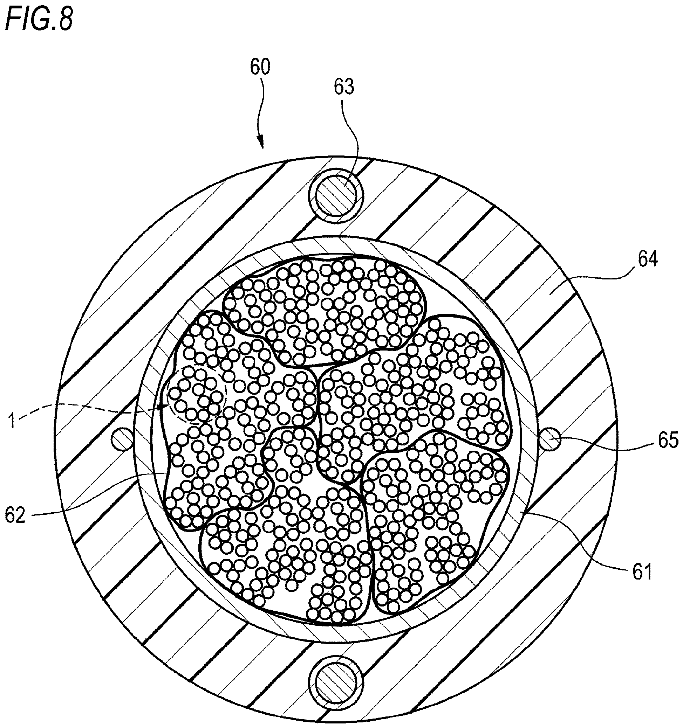

Next, one example of the optical fiber cable according to the embodiment will be described with reference to Fig. 8.

Fig. 8 is a sectional view illustrating a slot-less optical fiber cable 60 using the above-described intermittently-coupled type optical fiber ribbon 1.

The optical fiber cable 60 has a cylindrical tube 61 and a plurality of intermittently-coupled type optical fiber ribbons 1. The plurality of intermittently-coupled type optical fiber ribbons 1 may be bundled by an intervenient layer 62 such as aramid fibers. In addition, the plurality of intermittently-coupled type optical fiber ribbons 1 may have markings different from each other. Further, the plural bundled intermittently-coupled type optical fiber ribbons 1 are twisted, and a resin to be a tube 61 is extrusion-molded in the periphery thereof. The intermittently-coupled type optical fiber ribbons are covered with a jacket 64 together with a tension member 63. Incidentally, when waterproofness is required, a water absorptive yarn may be inserted into the tube 61. For example, hard materials such as polybutylene terephthalate and high density polyethylene are used as the resin to be the tube 61. Incidentally, a tear string 65 may be provided.

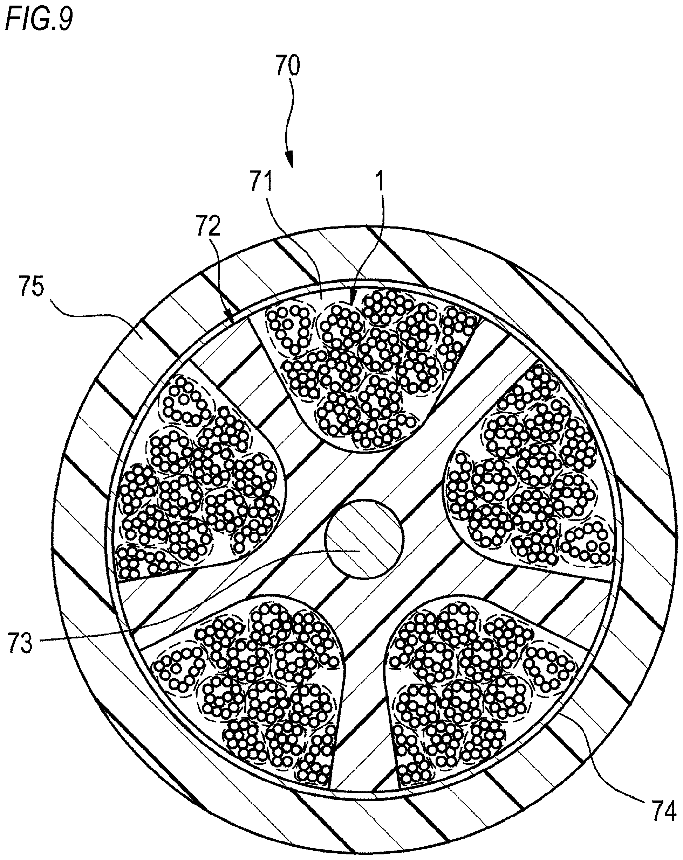

Another example of the optical fiber cable according to the embodiment will be described with reference to Fig. 9.

Fig. 9 is a sectional view illustrating a slot optical fiber cable 70 using the above-described intermittently-coupled type optical fiber ribbon 1.

The optical fiber cable 70 has a slot rod 72 having a plurality of slot grooves 71 and the plurality of intermittently-coupled type optical fiber ribbons 1. The optical fiber cable 70 has a structure in which the plurality of slot grooves 71 are radially provided in the slot rod 72 having a tension member 73 at the center. Incidentally, the plurality of slot grooves 71 may be provided to be twisted in a spiral shape, a SZ shape, or the like in the longitudinal direction of the optical fiber cable 70. Each slot groove 71 houses the plurality of intermittently-coupled type optical fiber ribbons 1 which are disassembled from a parallel state into a dense state. Each intermittently-coupled type optical fiber ribbon 1 may be bundled with an identification bundle material. A press winding tape 74 is wound around the slot rod 72, and a jacket 75 is formed around the press winding tape 74.

Since the cross-sectional area can be made smaller than that of the conventional intermittently-coupled type optical fiber ribbon, the densities of the slot-less optical fiber cable 60 and the slot optical fiber cable 70 can be increased compared to the conventional optical fiber cable. In addition, when the number of optical fibers is the same, the outer diameter can be made smaller than that of the conventional optical fiber cable.

### (Modification)

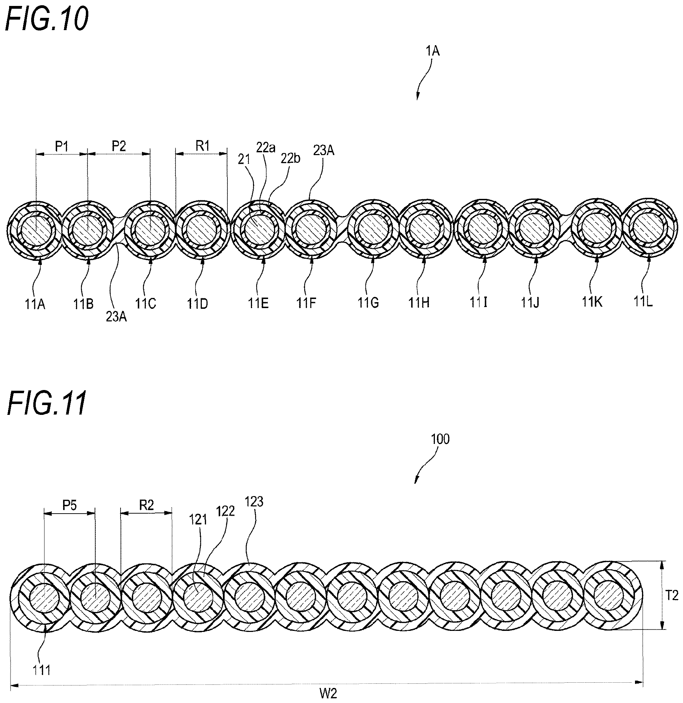

Next, a modification of the intermittently-coupled type optical fiber ribbon 1 will be described with reference to Fig. 10. Incidentally, the parts denoted by the same reference numeral as those of the above-described embodiment have the same functions, and thus the repetitive description will be omitted.

Unlike the intermittently-coupled type optical fiber ribbon 1, an intermittently-coupled type optical fiber ribbon 1A according to the modification is not configured to be formed by intermittently applying the coupling resin 15 between the ribbon type paired optical fibers.

As illustrated in Fig. 10, the intermittently-coupled type optical fiber ribbon 1A is formed such that the center distance P2 between every two optical fibers is 0.28 ± 0.03 mm. For example, in Fig. 10, the center distance between the optical fibers 11B and 11C is formed to be 0.28 ± 0.03 mm. In addition, the center distance between the optical fibers 11A and 11B is formed to be 0.20 ± 0.03 mm. The surfaces of twelve optical fibers 11A to 11L arranged in parallel are collectively coated with a tape resin 23A.

In the manufacturing method of the intermittently-coupled type optical fiber ribbon 1A, first, the optical fiber ribbon in which a plurality of cores (twelve cores in Fig. 10) are connected to be collectively coated with the tape resin 23A is manufactured such that the center distances of the optical fibers are the above-described values. Further, in the coupling part between the optical fibers formed such that the center distance is 0.28 ± 0.03 mm, for example, cuts (non-coupling part) are intermittently formed in the longitudinal direction by a cutter blade, so as to manufacture the intermittently-coupled type optical fiber ribbon 1A.

The intermittently-coupled type optical fiber ribbon 1A configured as above exhibits the same effect as the above-described intermittently-coupled type optical fiber ribbon 1.

### EMBODIMENTS

The description will be given about the comparison result of the cross-sectional areas in the intermittently-coupled type optical fiber ribbons of the embodiment and the first and second comparative examples.

### (First Comparative Example)

As illustrated in Fig. 11, an intermittently-coupled type optical fiber ribbon 100 of the first comparative example has a structure in which optical fibers 111 having an outer diameter R2 of 0.25 mm are brought into contact with each other to be arranged in parallel, and a tape resin 123 is applied therearound. A pitch P5 between the cores of the intermittently-coupled type optical fiber ribbon 100 is 0.25 mm, and the width W2 of the intermittently-coupled type optical fiber ribbon 100 is 3.04 mm. Incidentally, the structure of the optical fiber 111 is a single coated optical fiber having a glass fiber 121 and a coating layer 122 coating the glass fiber 121.

When the intermittently-coupled type optical fiber ribbon 100 is simply approximated as an aggregate of the optical fiber, and a thickness T2 of the aggregate is set to 0.285 mm, the cross-sectional area of the intermittently-coupled type optical fiber ribbon 100 is 0.765 mm².

### (Second Comparative Example)

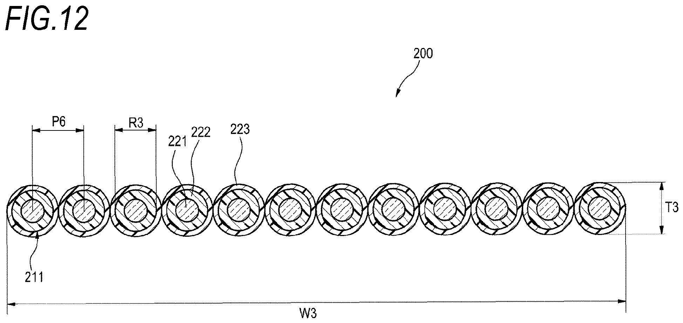

As illustrated in Fig. 12, an intermittently-coupled type optical fiber ribbon 200 of a second comparative example has a structure in which the peripheries of optical fibers 211 having an outer diameter R3 of 0.20 mm are each coated with a tape resin 223, and the optical fibers are arranged in parallel such that a pitch P6 between cores is 0.25 mm. The width W3 of the intermittently-coupled type optical fiber ribbon 200 is 3.00 mm. Incidentally, the structure of the optical fiber 211 is a single coated optical fiber having a glass fiber 221 and a coating layer 222 coating the glass fiber 221.

When the intermittently-coupled type optical fiber ribbon 200 is simply approximated as an aggregate of the optical fiber, and a thickness T3 of the aggregate is 0.25 mm, the cross-sectional area of the intermittently-coupled type optical fiber ribbon 200 is 0.589 mm², which means a reduction rate of about 23% in a cross-sectional area ratio compared to the first comparative example.

### (Embodiment)

In the intermittently-coupled type optical fiber ribbon 1 of the embodiment illustrated in Figs. 1 and 2, the intermittently-coupled type optical fiber ribbon of the embodiment is formed such that the outer diameter R1 of the optical fibers 11A to 11L is set to 0.20 mm, the pitch P1 between cores is set to 0.20mm, and the pitch P2 is set to 0.28 mm. At that time, the thickness T1 of the intermittently-coupled type optical fiber ribbon 1 is 0.24 mm, and the width W1 is 2.69 mm.

When the intermittently-coupled type optical fiber ribbon 1 is approximated as an aggregate of fibers having an outer diameter of 0.24 mm, the cross-sectional area is 0.543 mm², which means a reduction rate of about 29% in the cross-sectional area ratio compared to the first comparative example.

While the outer diameter of the optical fiber of the first comparative example is typically 0.25 mm, the outer diameters of the optical fiber of the second comparative example and the embodiment are 0.20 mm smaller than the typical one. For this reason, the cross-sectional area of the intermittently-coupled type optical fiber ribbon of the second comparative example or the embodiment is reduced compared to that of the first comparative example. However, the reduction rate is about 29% in the embodiment, which is larger than about 23% of the second comparative example.

In this way, even when the outer diameter of the optical fiber is the same, in the embodiment having a structure of the intermittently-coupled type optical fiber ribbon 1 of the embodiment, the sectional area can be reduced compared to the second comparative example which is the conventional intermittently-coupled type optical fiber ribbon. In addition, problems do not occur during the fusing.

Hereinbefore, the invention is described in detail with reference to a specific embodiment. However, it is clear for those skilled in the art that it is possible to perform various alterations or modifications without departing from the scope of the invention as defined by the appended claims. In particular, the number, position, shape, or the like of the above-described components are not limited to the embodiment, but can be modified to the number, position, shape, or the like suitable for implementing the claimed invention.

### REFERENCE SIGNS LIST

- 1: intermittently-coupled type optical fiber ribbon
- 11A-11L: optical fiber
- 12A-12F: dual-core optical fiber ribbon
- 14: non-coupling part
- 15: coupling resin
- 21: glass fiber
- 22a, 22b: coating layer
- 23: tape resin
- 31A~31L: V groove
- 41: coating die
- 42, 46: curing device
- 44: coating device
- 50: optical fiber cord
- 51: jacket
- 60, 70: optical fiber cable
- 61: cylindrical tube
- 71: slot groove
- 72: slot rod
- P1, P2: center distance
- R1: outer diameter dimension
- T1: thickness

## Claims

1. An intermittently-coupled type optical fiber ribbon (1) comprising a plurality of ribbon type paired optical fibers (12A, 12B, 12C, 12D, 12E, 12F),
wherein each of the plurality of ribbon type paired optical fibers is integrally formed by bringing two optical fibers (11A, 11B; 11C, 11D; 11E, 11F; 11G, 11H; 111, 11J; 11K, 11L) into contact with each other,
wherein the plurality of ribbon type paired optical fibers are arranged in parallel,
wherein intermittent couplings formed by a coupling part (13) in which adjacent ribbon type paired optical fibers are connected to each other and a non-coupling part (14) in which ribbon type paired optical fibers are not connected are provided in a longitudinal direction between adjacent ribbon type paired optical fibers of the intermittently-coupled type optical fiber ribbon,
wherein:
an outer diameter dimension of the optical fiber is 0.22mm or less;
the number of optical fibers of the intermittently-coupled type optical fiber ribbon is N;
for optical fibers, of the plurality of ribbon type paired optical fibers, sequentially numbered from M=1 to M=N in a lateral direction of the intermittently-coupled type optical fiber ribbon, where N is a multiple of four, **characterized in that**, for even values of M, a center distance between the M-th optical fiber and the M+1-th optical fiber at a position in the longitudinal direction with the coupling part interposed therebetween is equal to or greater than 0.25 mm and less than or equal to 0.31 mm and a center distance between the M-1-th optical fiber and the M-th optical fiber, which are included in one of the plurality of ribbon type paired optical fibers, is 0.20 ± 0.03mm.

2. The intermittently-coupled type optical fiber ribbon according to claim 1, wherein
a thickness of the intermittently-coupled type optical fiber ribbon is 0.26 mm or less.

3. The intermittently-coupled type optical fiber ribbon according to claim 1 or 2, wherein
the coupling part is a coupling resin applied between the ribbon type paired optical fibers.

4. The intermittently-coupled type optical fiber ribbon according to any one of claims 1 to 3, wherein
the optical fiber has a glass fiber (21) and two layers of coating layers (22a, 22b) coating the glass fiber, and
a Young's modulus of an inner coating layer in two layers of the coating layer is 0.5 MPa or less.

5. An optical fiber cable (60) comprising:
a cylindrical tube (61); and
a plurality of intermittently-coupled type optical fiber ribbons according to any one of claims 1 to 4, wherein
the plurality of intermittently-coupled type optical fiber ribbons are covered with the tube.

6. An optical fiber cable (70) comprising:
a slot rod (72) having a plurality of slot grooves; and
the plurality of intermittently-coupled type optical fiber ribbons according to any one of claims 1 to 4, wherein
the plurality of intermittently-coupled type optical fiber ribbons are housed in each of the slot grooves.

7. An optical fiber cord (60) comprising:
a jacket (64); and
the intermittently-coupled type optical fiber ribbon according to any one of claims 1 to 4, wherein
the intermittently-coupled type optical fiber ribbon is covered with the jacket.

8. A manufacturing method of an intermittently-coupled type optical fiber ribbon (1), the method comprising:
a process of arranging a plurality of optical fibers (11A, 11B, 11C, 11D, 11E, 11F, 11G, 11H, 111, 11J, 11K, 11L) in parallel and integrating every two optical fibers by bringing the optical fibers into contact with each other, thereby forming a plurality of ribbon type paired optical fibers (12A, 12B, 12C, 12D, 12E, 12F);
an applying process of intermittently applying a coupling resin between the adjacent ribbon type paired optical fibers in the plurality of ribbon type paired optical fibers in a longitudinal direction; and
a curing process of curing the coupling resin, wherein
when the applying process and the curing process are performed,
intermittent couplings formed by a coupling part (13) in which the adjacent ribbon type paired optical fibers are connected with each other and a non-coupling part in which the ribbon type paired optical fibers are not connected are provided in a longitudinal direction direction between adjacent ribbon type paired optical fibers of the intermittently-coupled type optical fiber ribbon,
the number of optical fibers of the intermittently-coupled type optical fiber ribbon is N,
an outer diameter dimension of the optical fiber is 0.22mm or less,
for optical fibers, of the plurality of ribbon type paired optical fibers, sequentially numbered from M=1 to M=N in a lateral direction of the intermittently-coupled type optical fiber ribbon, where N is a multiple of four, for even values of M a center distance between the M-th optical fiber and the M+1-th optical fiber at a position in the longitudinal direction with the coupling part interposed therebetween is equal to or greater than 0.25 mm and less than or equal to 0.31 mm and a center distance between the M-1-th optical fiber and the M-th optical fiber, which are included in one of the plurality of ribbon type paired optical fibers, is 0.20 ± 0.03mm.

## Patentansprüche

1. Lichtleitfaserband vom intermittierend gekoppelten Typ (1), umfassend eine Vielzahl von gepaarten Lichtleitfasern vom Bandtyp (12A, 12B, 12C, 12D, 12E, 12F),
wobei jede der Vielzahl von gepaarten Lichtleitfasern vom Bandtyp integral gebildet wird, indem zwei Lichtleitfasern (11A, 11B; 11C, 11D; 11E, 11F; 11G, 11H; 111, 11J; 11K, 11L) in Kontakt miteinander gebracht werden,
wobei die Vielzahl von gepaarten Lichtleitfasern vom Bandtyp parallel angeordnet sind,
wobei intermittierende Kopplungen, die durch einen Kopplungsteil (13), in dem benachbarte gepaarte Lichtleitfasern vom Bandtyp miteinander verbunden sind, und einen Nicht-Kopplungsteil (14), in dem gepaarte Lichtleitfasern vom Bandtyp nicht verbunden sind, gebildet werden, in einer Längsrichtung zwischen benachbarten gepaarten Lichtleitfasern vom Bandtyp des Lichtleitfaserbands vom intermittierend gekoppelten Typ vorgesehen sind,
wobei:
eine Außendurchmesserabmessung der Lichtleitfaser 0,22 mm oder weniger ist;
die Anzahl der Lichtleitfasern des Lichtleitfaserbands vom intermittierend gekoppelten Typ N ist;
für Lichtleitfasern der Vielzahl von gepaarten Lichtleitfasern vom Bandtyp, die in einer seitlichen Richtung des Lichtleitfaserbands vom intermittierend gekoppelten Typ der Reihe nach von M=1 bis M=N nummeriert sind, wobei N ein Vielfaches von vier ist,
**dadurch gekennzeichnet, dass** für gerade Werte von M ein Mittenabstand zwischen der M-ten Lichtleitfaser und der M+1-ten Lichtleitfaser an einer Position in der Längsrichtung mit dem dazwischen angeordneten Kopplungsteil gleich oder größer als 0,25 mm und kleiner als oder gleich 0,31 mm ist und ein Mittenabstand zwischen der M-1-ten Lichtleitfaser und der M-ten Lichtleitfaser, die in einer der Vielzahl von gepaarten Lichtleitfasern vom Bandtyp enthalten sind, 0,20 ± 0,03 mm beträgt.

2. Lichtleitfaserband vom intermittierend gekoppelten Typ nach Anspruch 1, wobei
eine Dicke des Lichtleitfaserbands vom intermittierend gekoppelten Typ 0,26 mm oder weniger beträgt.

3. Lichtleitfaserband vom intermittierend gekoppelten Typ nach Anspruch 1 oder 2, wobei
der Kopplungsteil ein Kopplungsharz ist, das zwischen den gepaarten Lichtleitfasern vom Bandtyp aufgebracht ist.

4. Lichtleitfaserband vom intermittierend gekoppelten Typ nach einem der Ansprüche 1 bis 3, wobei
die Lichtleitfaser eine Glasfaser (21) und zwei Schichten von Beschichtungsschichten (22a, 22b) aufweist, die die Glasfaser beschichten, und
ein Elastizitätsmodul einer inneren Beschichtungsschicht in zwei Schichten der Beschichtungsschicht 0,5 MPa oder weniger beträgt.

5. Lichtleitfaserkabel (60), umfassend:
ein zylindrisches Rohr (61); und
eine Vielzahl von Lichtleitfaserbändern vom intermittierend gekoppelten Typ nach einem der Ansprüche 1 bis 4, wobei
die Vielzahl von Lichtleitfaserbändern vom intermittierend gekoppelten Typ mit dem Rohr bedeckt sind.

6. Lichtleitfaserkabel (70), umfassend:
einen Schlitzstab (72), der eine Vielzahl von Schlitznuten aufweist; und
die Vielzahl von Lichtleitfaserbändern vom intermittierend gekoppelten Typ nach einem der Ansprüche 1 bis 4, wobei
die Vielzahl von Lichtleitfaserbändern vom intermittierend gekoppelten Typ in jeder der Schlitznuten untergebracht sind.

7. Lichtleitfaserleitung (60), umfassend:
einen Mantel (64); und
das Lichtleitfaserband vom intermittierend gekoppelten Typ nach einem der Ansprüche 1 bis 4, wobei
das Lichtleitfaserband vom intermittierend gekoppelten Typ mit dem Mantel bedeckt ist.

8. Herstellungsverfahren für ein Lichtleitfaserband vom intermittierend gekoppelten Typ (1), das Verfahren umfassend:
einen Prozess des parallelen Anordnens einer Vielzahl von Lichtleitfasern (11A, 11B, 11C, 11D, 11E, 11F, 11G, 11H, 111, 11J, 11K, 11L) und des Integrierens von jeweils zwei Lichtleitfasern, indem die Lichtleitfasern miteinander in Kontakt gebracht werden, wodurch eine Vielzahl von gepaarten Lichtleitfasern vom Bandtyp (12A, 12B, 12C, 12D, 12E, 12F) gebildet wird;
einen Aufbringungsprozess des intermittierenden Aufbringens eines Kopplungsharzes zwischen die benachbarten gepaarten Lichtleitfasern vom Bandtyp in der Vielzahl von gepaarten Lichtleitfasern vom Bandtyp in einer Längsrichtung; und
einen Aushärtungsprozess des Aushärtens des Kopplungsharzes, wobei, wenn der Aufbringungsprozess und der Aushärtungsprozess durchgeführt werden,
intermittierende Kopplungen, die durch einen Kopplungsteil (13), in dem die benachbarten gepaarten Lichtleitfasern vom Bandtyp miteinander verbunden sind, und einen Nicht-Kopplungsteil, in dem die gepaarten Lichtleitfasern vom Bandtyp nicht verbunden sind, gebildet werden, in einer Längsrichtung zwischen benachbarten gepaarten Lichtleitfasern vom Bandtyp des Lichtleitfaserbands vom intermittierend gekoppelten Typ bereitgestellt werden,
die Anzahl der Lichtleitfasern des Lichtleitfaserbands vom intermittierend gekoppelten Typ N ist,
eine Außendurchmesserabmessung der Lichtleitfaser 0,22 mm oder weniger beträgt,
für Lichtleitfasern der Vielzahl von gepaarten Lichtleitfasern vom Bandtyp, die in einer seitlichen Richtung des Lichtleitfaserbands vom intermittierend gekoppelten Typ der Reihe nach von M=1 bis M=N nummeriert sind, wobei N ein Vielfaches von vier ist, für gerade Werte von M ein Mittenabstand zwischen der M-ten Lichtleitfaser und der M+1-ten Lichtleitfaser an einer Position in der Längsrichtung mit dem dazwischen angeordneten Kopplungsteil gleich oder größer als 0,25 mm und weniger als oder gleich 0,31 mm ist und ein Mittenabstand zwischen der M-1-ten Lichtleitfaser und der M-ten Lichtleitfaser, die in einer der Vielzahl von gepaarten Lichtleitfasern vom Bandtyp enthalten sind, 0,20 ± 0,03 mm beträgt.

## Revendications

1. Ruban de fibres optiques (1) de type à couplage intermittent comprenant une pluralité de fibres optiques appariées de type ruban (12A, 12B, 12C, 12D, 12E, 12F),
dans lequel chacune de la pluralité de fibres optiques appariées de type ruban est formée d'un seul tenant en amenant deux fibres optiques (11A, 11B ; 11C, 11D ; 11E, 11F ; 11G, 11H ; 11I, 11J ; 11K, 11L) en contact l'une avec l'autre,
dans lequel la pluralité de fibres optiques appariées de type ruban sont agencées en parallèle,
dans lequel des couplages intermittents, formés par une partie de couplage (13) dans laquelle des fibres optiques appariées de type ruban adjacentes sont connectées les unes aux autres et une partie de non-couplage (14) dans laquelle des fibres optiques appariées de type ruban ne sont pas connectées, sont prévus dans une direction longitudinale entre des fibres optiques appariées de type ruban adjacentes du ruban de fibres optiques de type à couplage intermittent,
dans lequel :
une dimension de diamètre externe de la fibre optique est de 0,22 mm ou moins ;
le nombre de fibres optiques du ruban de fibres optiques de type à couplage intermittent est N ;
pour des fibres optiques, de la pluralité de fibres optiques appariées de type ruban, numérotées en séquence de M = 1 à M = N dans une direction latérale du ruban de fibres optiques de type à couplage intermittent, où N est un multiple de quatre,
**caractérisé en ce que**, pour les valeurs paires de M, une distance centrale, entre la M-ième fibre optique et la M+1-ième fibre optique à une position dans la direction longitudinale avec la partie de couplage interposée entre elles, est égale ou supérieure à 0,25 mm et inférieure ou égale à 0,31 mm et une distance centrale, entre la M-1-ième fibre optique et la M-ième fibre optique, qui sont comprises dans l'une de la pluralité de fibres optiques appariées de type ruban, est de 0,20 ± 0,03 mm.

2. Ruban de fibres optiques de type à couplage intermittent selon la revendication 1, dans lequel
une épaisseur du ruban de fibres optiques de type à couplage intermittent est de 0,26 mm ou moins.

3. Ruban de fibres optiques de type à couplage intermittent selon la revendication 1 ou la revendication 2, dans lequel
la partie de couplage est une résine de couplage appliquée entre les fibres optiques appariées de type ruban.

4. Ruban de fibres optiques de type à couplage intermittent selon l'une quelconque des revendications 1 à 3, dans lequel
la fibre optique a une fibre de verre (21) et deux couches de couches de revêtement (22a, 22b) revêtant la fibre de verre, et
un module de Young d'une couche de revêtement interne dans deux couches de la couche de revêtement est de 0,5 MPa ou moins.

5. Câble à fibres optiques (60) comprenant :
un tube cylindrique (61) ; et
une pluralité de rubans de fibres optiques de type à couplage intermittent selon l'une quelconque des revendications 1 à 4, dans lequel
la pluralité de rubans de fibres optiques de type à couplage intermittent sont recouverts par le tube.

6. Câble à fibres optiques (70) comprenant :
une tige à fentes (72) ayant une pluralité de rainures formant des fentes ; et
la pluralité de rubans de fibres optiques de type à couplage intermittent selon l'une quelconque des revendications 1 à 4, dans lequel
la pluralité de rubans de fibres optiques de type à couplage intermittent sont logés dans chacune des rainures formant des fentes.

7. Cordon à fibres optiques (60) comprenant :
une gaine (64) ; et
le ruban de fibres optiques de type à couplage intermittent selon l'une quelconque des revendications 1 à 4, dans lequel
le ruban de fibres optiques de type à couplage intermittent est recouvert par la gaine.

8. Procédé de fabrication d'un ruban de fibres optiques (1) de type à couplage intermittent, le procédé comprenant :
un processus consistant à agencer une pluralité de fibres optiques (11A, 11B, 11C, 11D, 11E, 11F, 11G, 11H, 11I, 11J, 11K, 11L) en parallèle et à rendre solidaire chaque paire de fibres optiques en amenant les fibres optiques en contact l'une avec l'autre, formant ainsi une pluralité de fibres optiques appariées de type ruban (12A, 12B, 12C, 12D, 12E, 12F) ;
un processus d'application consistant à appliquer de manière intermittente une résine de couplage entre les fibres optiques appariées de type ruban adjacentes dans la pluralité de fibres optiques appariées de type ruban dans une direction longitudinale ; et
un processus de durcissement consistant à durcir la résine de couplage, dans lequel, lorsque le processus d'application et le processus de durcissement sont réalisés,
des couplages intermittents, formés par une partie de couplage (13) dans laquelle les fibres optiques appariées de type ruban adjacentes sont connectées les unes avec les autres et une partie de non-couplage dans laquelle les fibres optiques appariées de type ruban ne sont pas connectées, sont prévus dans une direction longitudinale entre des fibres optiques appariées de type ruban adjacentes du ruban de fibres optiques de type à couplage intermittent,
le nombre de fibres optiques du ruban de fibres optiques de type à couplage intermittent est N,
une dimension de diamètre externe de la fibre optique est de 0,22 mm ou moins,
pour des fibres optiques, de la pluralité de fibres optiques appariées de type ruban, numérotées en séquence de M = 1 à M = N dans une direction latérale du ruban de fibres optiques de type à couplage intermittent, où N est un multiple de quatre, pour les valeurs paires de M, une distance centrale, entre la M-ième fibre optique et la M+1-ième fibre optique à une position dans la direction longitudinale avec la partie de couplage interposée entre elles, est égale ou supérieure à 0,25 mm et inférieure ou égale à 0,31 mm et une distance centrale, entre la M-1-ième fibre optique et la M-ième fibre optique, qui sont comprises dans l'une de la pluralité de fibres optiques appariées de type ruban, est de 0,20 ± 0,03 mm.
